# EUROPEAN PATENT SPECIFICATION

(11) **EP 3 653 933 B1**
(45) Date of publication and mention of the grant of the patent: **27.12.2023**
(21) Application number: 18831781.2
(22) Date of filing: 06.07.2018
(51) Int. Cl.: F23D 14/84, F23D 14/56, F23L 7/00, F23D 14/22, F23D 14/32, F23D 14/58

(54) **OXYGEN ENRICHED BURNER AND HEATING METHOD USING OXYGEN ENRICHED BURNER**
SAUERSTOFFANGEREICHERTER BRENNER UND HEIZVERFAHREN MIT SAUERSTOFFANGEREICHERTEM BRENNER
BRÛLEUR ENRICHI EN OXYGÈNE ET PROCÉDÉ DE CHAUFFAGE FAISANT APPEL À UN BRÛLEUR ENRICHI EN OXYGÈNE

(30) Priority: 10.07.2017 JP 2017134832
(43) Date of publication of application: 20.05.2020
(73) Proprietor: Taiyo Nippon Sanso Corporation, Tokyo 142-8558 (JP)
(72) Inventor: SAITO Takeshi, Tokyo 142-8558 (JP); YAMAMOTO Yasuyuki, Tokyo 142-8558 (JP); HAGIHARA Yoshiyuki, Tokyo 142-8558 (JP); SEINO Naoki, Tokyo 142-8558 (JP)
(74) Representative: HGF
(86) International application number: PCT/JP2018/025700
(87) International publication number: WO 2019/013127

(56) References cited:
- WO-A1-97/44618
- WO-A1-2018/051576
- JP-A- H04 273 904
- JP-A- H11 132 420
- JP-A- S55 143 307
- JP-A- 2000 161 614
- JP-A- 2005 113 200
- JP-A- 2005 113 200
- JP-A- 2013 079 753
- JP-A- 2014 505 851
- JP-A- 2015 165 180
- US-B1- 6 244 854

## Description

### Field of the Invention

The present invention relates to an oxygen enriched burner and a method for heating using an oxygen enriched burner.

### Description of Related Art

In general, in order to prevent damage of refractories (fire bricks, and the like) in a furnace (container) due to rapid heating, the furnace which receives pig iron (molten metal), such as a ladle used in the iron making process is preheated using a flame of a burner.

The flame of the burner used for such applications is required to have high heat transfer efficiency and to have characteristics which allow an object to be heated to be heated uniformly.

As a method for increasing the heat transfer efficiency of the burner, conventionally, for example, as in the technique disclosed in Patent Document 1, there is a method for increasing the heat transfer efficiency of the burner by increasing the flame temperature using an oxygen enriched air as an oxidant. However, in the burner having a structure as disclosed in Patent Document 1, since the flame has a linear shape, there is a tendency that one point of the object to be heated tends to be locally heated, and the burner has a problem that uniform heating is difficult.

On the other hand, Patent Document 2 discloses a method which can uniform heating while maintaining heat transfer efficiency by utilizing a self-induced oscillation phenomenon of a jet flow to oscillate the flame. Patent Document 3 discloses another oxygen combustion burner.

### Prior Art Documents

### Patent Literature

Patent Document 1: Japanese Unexamined Patent Application, First Publication No. 2016-085021
Patent Document 2: Japanese Unexamined Patent Application, First Publication No. 2013-079753
Patent Document 3: JP2000-161614

### Disclosure of the invention

### Problem to be solved by the invention

On the other hand, in the technique disclosed in Patent Document 2, since the flame oscillates, the flame tends to be shortened. As a result, when trying to heat an object to be heated away from the tip surface of the burner in the axial direction by convection heat transfer, there is a problem that heat transfer efficiency decreases because the flame does not reach the object to be heated.

The present invention has been made in view of the problems above. An object of the present invention is to provide an oxygen enriched burner which can heat uniformly with excellent heat transfer efficiency even at a position away from the tip surface of the burner when heating an object to be heated, such as a ladle which receives pig iron, while oscillating the flame by self-induced oscillation, and a method for heating using an oxygen enriched burner.

### Means to solve the problem

The invention is defined in the appended claims.

In order to solve the problems, the present invention provides the following oxygen enriched burners.
(1) A burner which is configured to eject at least one of an oxygen enriched air and a fuel gas from each of a plurality of fluid ejection outlets provided at the tip surface and burns,
   wherein a plurality of the fluid ejection outlets include a central fluid outlet and peripheral fluid outlet arranged around the central fluid outlet,
   side walls of a fluid ejection flow path on an upstream side of the central fluid outlet is provided with a pair of openings at opposing positions, and a pair of the openings communicate with each other via a communication pipe,
   the fluid ejection flow path on a downstream side of a pair of the openings has a sectional fan shape in which a distance between a pair of the side walls gradually expands toward the downstream side,
   the peripheral fluid outlet includes a pair of first peripheral fluid outlets arranged to face each other and a pair of second peripheral fluid outlets arranged to face each other,
   the first peripheral fluid outlets and the second peripheral fluid outlets are arranged around the central fluid outlet so as to sandwich the central fluid outlet,
   a pair of the second peripheral fluid outlets are arranged in a direction orthogonal to the facing direction of a pair of the openings,
   an angle γ° formed by a central axis in an ejection direction of the oxygen enriched air or the fuel gas in the central fluid outlet and a central axis in an ejection direction of the oxygen enriched air or the fuel gas in a pair of the second peripheral fluid outlets satisfies an expression {0° < γ ≤ 15°}, and
   an outlet width D1 between a pair of the side walls at which a pair of the openings are arranged in the central fluid outlet and an outlet width D2 of a pair of the second peripheral fluid outlets in a direction along the outlet width D1 satisfy an expression {0.5D1 ≤ D2 ≤ D1}.
(2) The oxygen enriched burner according to (1), wherein a pair of the first peripheral fluid outlets are arranged so as to sandwich a pair of the side walls in which the openings are arranged from both sides.
(3) The oxygen enriched burner according to (1) or (2), wherein a pair of the first peripheral fluid outlets and a pair of the second peripheral fluid outlets are configured to individually control an amount of the oxygen enriched air ejected or the fuel gas ejected.

In addition, in order to solve the problems, the present invention provides the following methods for heating using an oxygen enriched burner.

(4) A method for heating an object to be heated using an oxygen enriched burner, wherein the oxygen enriched burner is the oxygen enriched burner according to any one of (1) to (3).

### Effects of the invention

The oxygen enriched burner according to the present invention includes the central fluid outlet, a pair of the first peripheral fluid outlets and a pair of the second peripheral fluid outlets which are arranged in a direction orthogonal to each other around the central fluid outlet, and a pair of the openings on the side wall of the fluid ejection flow path at the upstream side of the central fluid outlet, the angle γ° formed by the central axis of the gas ejection direction in the central fluid outlet and the central axis of the gas ejection direction in a pair of the second peripheral fluid outlets is within the predetermined range, and the outlet width D1 between a pair of the side walls at which the openings are arranged in the central fluid outlet and the outlet width D2 of the second peripheral fluid outlets in the direction along the outlet width D1 satisfy the predetermined relationship.

As described above, in the burner having a structure in which the flame is oscillated by self-induced oscillation, by optimizing the arrangement and shape of each fluid ejection outlet, both the effect of heating uniformly over a wide area by the self-induced oscillation action and the effect of obtaining high heat transfer efficiency up to a position away from the tip surface of the burner in the axial direction can be obtained. Therefore, when heating the object to be heated, it is possible to uniformly heat with excellent heat transfer efficiency even at a position away from the tip surface of the burner.

In addition, the method for heating using an oxygen enriched burner of the present embodiment is the method for heating using the oxygen enriched burner having the configuration above. Accordingly, similarly to the above, it is possible to uniformly heat the object to be heated over a wide area and to obtain high heat transfer efficiency up to a position away from the tip surface of the burner.

Therefore, similarly to the above, when heating the object to be heated, it is possible to uniformly heat with excellent heat transfer efficiency even at a position away from the tip surface of the burner.

### Brief description of drawings

FIG. 1 is a diagram schematically showing an oxygen enriched burner of an embodiment according to the present invention, and is a plan diagram showing an example of a positional relationship between a central fluid outlet and periphery fluid outlets.
FIG. 2 is a diagram schematically showing an oxygen enriched burner of an embodiment according to the present invention, and is a cross-sectional diagram taken along the line A-A of the oxygen enriched burner shown in FIG. 1.
FIG. 3 is a diagram schematically showing an oxygen enriched burner of an embodiment according to the present invention, and is a cross-sectional diagram taken along the line B-B of the oxygen enriched burner shown in FIG. 1.
FIG. 4 is a diagram schematically showing an oxygen enriched burner of an embodiment according to the present invention, and FIG. 4A and FIG. 4B are conceptual diagrams showing an oscillation state of an ejection direction of a fluid in the oxygen enriched burner shown in FIGS. 1 to 3.
FIG. 5 is a diagram schematically showing an oxygen enriched burner used in Examples of the present invention and Comparative Examples, FIGS. 5Ais a side diagram and a plan diagram of a burner used in Comparative Example 1, FIG. 5B is a side diagram and a plan diagram of a burner used in Comparative Example 2, FIG. 5C is a side diagram and a plan diagram of a burner used in Comparative Example 3, and FIG. 5D is a longitudinal sectional diagram and a plan diagram of a burner used in Example 1.
FIG. 6 is a diagram for explaining an example of an oxygen enriched burner according to the present invention, and is a graph showing a relationship between a distance from the tip surface of a burner and an amount of heat transfer in each burner of Comparative Examples 1 to 3 and Example 1.
FIG. 7 is a diagram schematically showing a method for heating using an oxygen enriched burner of an embodiment according to the present invention, and is a diagram schematically showing a structure at the time of applying an oxygen enriched burner according to the present invention to a tundish used in a steelmaking process.
FIG. 8 is a diagram for explaining an Example of the oxygen enriched burner according to the present invention, and is a diagram showing a relationship between preheating time and a difference ΔT of a maximum value and a minimum value of a temperature at a furnace bottom when a heating test in a furnace was performed using each burner of Example 2 and Comparative Example 4 and a tundish simulated furnace shown in FIG. 7.
FIG. 9 is a diagram for explaining an Example of the oxygen enriched burner according to the present invention, and is a diagram showing a relationship between a distance from a central axis of a burner and a temperature at a furnace bottom when a heating test in a furnace was performed using each burner of Example 3 and Comparative

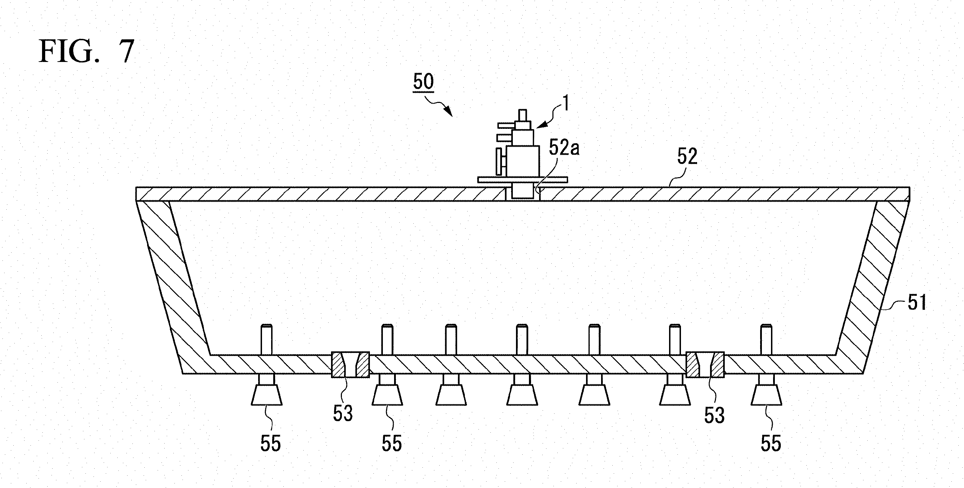

Example 5 and a tundish simulated furnace shown in FIG. 7.

### Detailed description of the invention

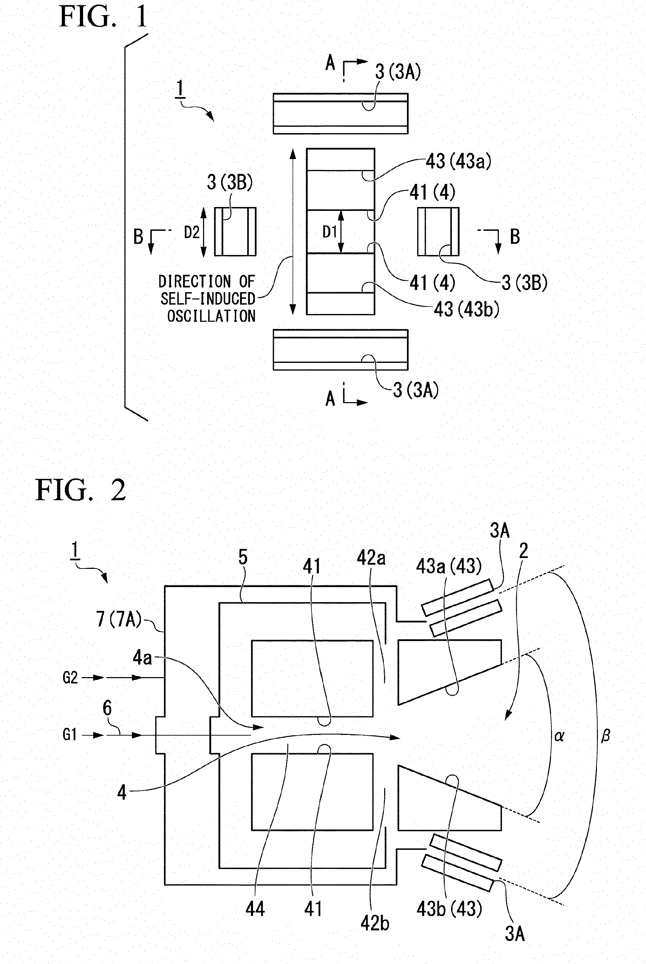

Hereinafter, an oxygen enriched burner and a method for heating using an oxygen enriched burner of an embodiment according to the present invention will be described with reference to FIGS. 1 to 9 as appropriate. In addition, in the drawings used in the following description, in order to make the features easy to understand, there are cases in which the portions which are characteristic features of the present invention are enlarged for convenience, and the dimensional ratios and the like of the respective constituent elements are not always the same as the actual ones. Furthermore, the materials and the like exemplified in the following description are examples, the present invention is not limited to them, and can be appropriately modified and implemented without changing the gist thereof.

The oxygen enriched burner according to the present invention can be applied to, for example, preheating a tundish (see tundish 50 shown in FIG. 7) used for storing and transporting molten iron or molten steel in a steelmaking or steelmaking factory.

### [Oxygen Enriched Burner]

Hereinafter, a structure and a combustion method of an oxygen enriched burner according to the present invention will be described in detail.

### [Structure of Oxygen Enriched Burner]

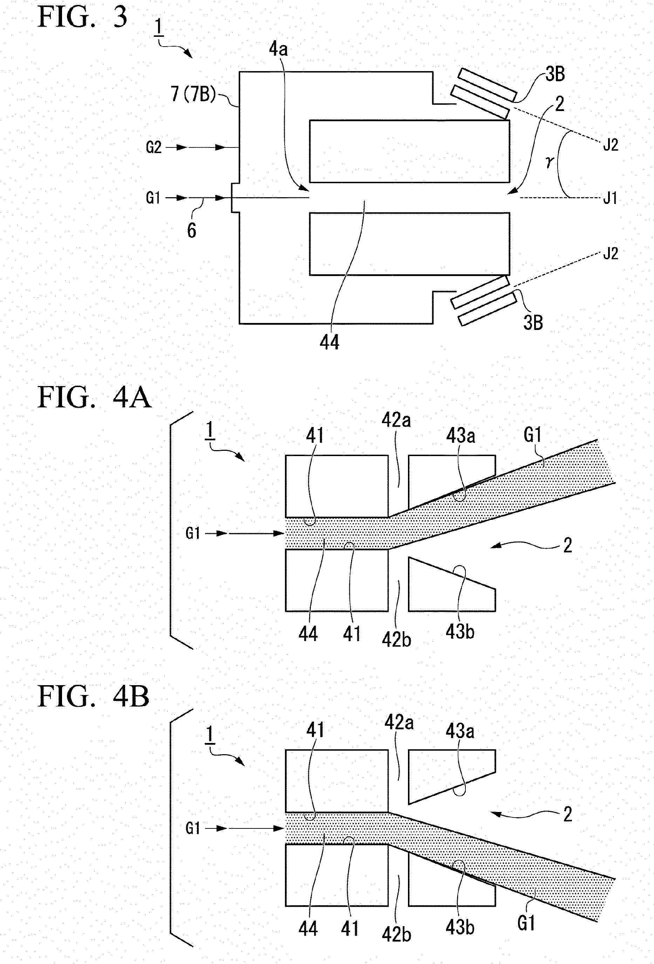

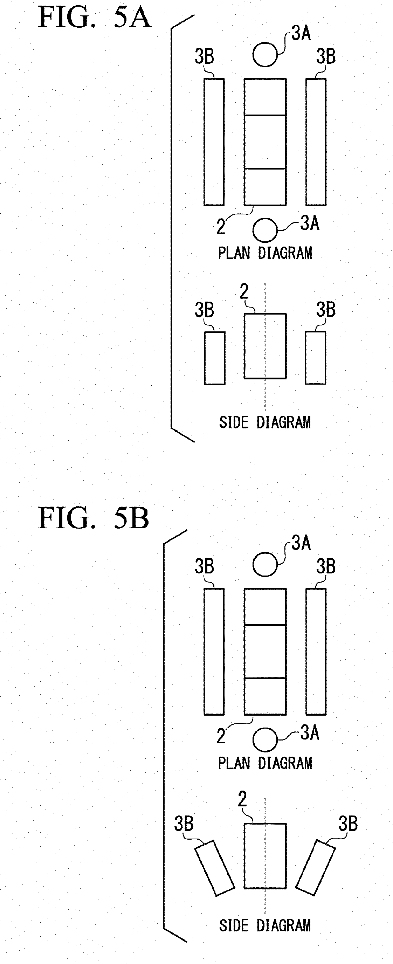

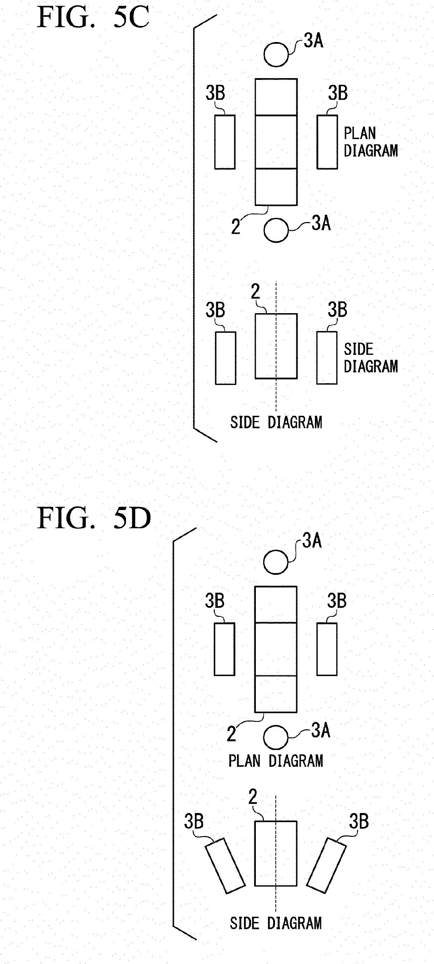

FIGS. 1 to 3 are diagrams for explaining the structure of an oxygen enriched burner 1 of an embodiment according to the present invention. FIG. 1 is a plan diagram showing an example of the positional relationship between a central fluid outlet and peripheral fluid outlets. FIG. 2 is a cross-sectional diagram (vertical cross-sectional diagram) taken along the line A-A shown in FIG. 1. FIG. 3 is a cross-sectional diagram (horizontal cross-sectional diagram) taken along the line B-B shown in FIG. 1. FIG. 4 is a conceptual diagram showing an oscillation state of a fluid in the ejection direction in the oxygen enriched burner 1 of an embodiment according to the present invention. Moreover, in FIG. 1 to 4 (and FIG. 5 described in Examples) are schematic diagrams for showing the arrangement relationship and size of each fluid ejection outlet, openings, and the like. For this reason, illustration of detailed parts, such as a pipe wall as a nozzle, is partially omitted.

As shown in FIGS. 1 to 4, the oxygen enriched burner 1 of the present embodiment ejects at least one of an oxygen enriched air or a fuel gas from each of a plurality of fluid ejection outlets provided at the tip surface, and burns,

Specifically, the oxygen enriched burner 1 of the present embodiment includes a plurality of fluid ejection outlets. More specifically, the oxygen enriched burner 1 of the present embodiment includes a central fluid outlet 2 and peripheral fluid outlets 3 arranged around the central fluid outlet 2.

The fluid ejection flow path 4 is located on the upstream side of the central fluid outlet 2, and a pair of openings 42a, 42b are provided on the side walls 41 at positions facing each other. A pair of the openings 42a, 42b are communicated with each other through a communication pipe 5.

The fluid ejection flow path 4 positioned on the downstream side of the openings 42a, 42b has a sectional fan shape in which the distance between a pair of the side walls 43, 43 gradually expands toward the downstream side.

The peripheral fluid outlets 3 are arranged so as to sandwich the central fluid outlet 2. The peripheral fluid outlets 3 are composed of a pair of first peripheral fluid outlets 3A, 3A arranged opposite to each other around the central fluid outlet 2, and a pair of second peripheral fluid outlets 3B, 3B arranged opposite to each other around the central fluid outlet 2.

A pair of the second peripheral fluid outlets 3B, 3B are arranged so as to sandwich the central fluid outlet 2 from both sides in a direction orthogonal to the facing direction of a pair of the openings 42a, 42b.

Furthermore, as shown in FIG. 3, an angle γ° formed by the central axis in an ejection direction of an oxygen enriched air or a fuel gas in the central fluid outlet 2 and the central axis J2 in the ejection direction of an oxygen enriched air or a fuel gas in a pair of the second peripheral fluid outlets 3B, 3B satisfies the following expression {0° < γ ≤ 15°}.

Then, as shown in FIG. 1, the outlet width D1 between a pair of the side walls 41, 41 at which a pair of the openings 42a, 42b are arranged and the outlet width D2 of a pair of the second peripheral fluid outlets 3B, 3B in the direction along the outlet width D1 satisfy the following expression {0.5D1 ≤ D2 ≤ D1}.

In the oxygen enriched burner 1 of the present embodiment, an oxygen enriched air and a fuel gas are ejected separately from the central fluid outlet 2 or the peripheral fluid outlet 3, respectively, but any gas may be ejected from either eject outlet. For example, the fuel gas G1 may be ejected from the central fluid outlet 2, and the oxygen enriched air G2 may be ejected from the peripheral fluid outlets 3.

The central fluid outlet (central fluid ejection nozzle) 2 is configured as an outlet (nozzle) for ejecting any gas toward the outside by supplying with the oxygen enriched air or the fuel gas from the fluid ejection flow path 4 at the upstream side. As will be described later, the central fluid outlet 2 has a rectangular shape in plan diagram as the sectional shape of the fluid ejection flow path 4 is substantially rectangular.

By connecting the central fluid supply line 6 to the inlet 4a of the fluid ejection flow path 4, either the oxygen enriched air or the fuel gas is introduced into the fluid ejection flow path 4. Either the introduced oxygen enriched air or fuel gas is ejected from the central fluid outlet 2.

Moreover, since the fluid ejection flow path 4 is, for example, formed so that the cross-sectional shape in a direction orthogonal to the flow direction of fluid (gas) is substantially rectangular, the fluid ejection flow path 4 has a pair of the side walls 41, 41 as explained above. The side walls 41 and 41 are provided with a pair of the openings 42a, 42b so as to face each other. In addition, as shown in FIG. 2, the communication pipe 5 communicates between a pair of the openings 42a, 42b.

Further, as described above, the fluid ejection flow path 4 has a sectional fan shape in which the distance between a pair of the side walls 43, 43 on the downstream side of the openings 42a, 42b gradually expands toward the downstream side. That is, the fluid ejection flow path 4 is formed by a pair of the side walls 43, 43 such that the longitudinal section of the fluid ejection flow path 4 is substantially V-shaped. On the other hand, the fluid ejection flow path 4 on the upstream side of the openings 42a, 42b is formed as a rectangular tube-shaped flow path 44 having a substantially rectangular cross section extending substantially parallel to and between the opposing side walls.

In the oxygen enriched burner 1 of the present embodiment, as in the above configuration, a pair of the opening portions 42a, 42b communicated with each other by a communication pipe 5 are arranged oppositely in a pair of the side walls 41 and 41 forming the fluid ejection flow path 4. Thereby, self-induced oscillation of a so-called flip-flop nozzle can be generated in the oxygen enriched air or the fuel gas ejected from the central fluid outlet 2. In other words, as shown in FIGS. 4A and 4B, when the fluid (the oxygen enriched air G2 or the fuel gas G1) which has passed through the rectangular tube-shaped flow path 44 passes between a pair of the openings 42a, 42b and flows between a pair of the side walls 43, 43 having a fan-shaped cross section, the fluid is ejected from the central fluid outlet 2 while being self-induced oscillated so as to alternately contact first surface 43a and second surface 43b of the side walls 43, 43 (see also the arrow R shown in FIG. 1).

Note that the amplitude and frequency of the fluid due to the self-induced oscillation vary depending on various conditions such as the dimensions of the openings 42a, 42b, a pair of the side walls 43, 43, and the communication pipe 5 and the flow velocity of the fluid. Therefore, by optimally setting the dimensions of these parts, it is possible to adjust the fluid ejected from the central fluid outlet 2 to oscillate at a desired angle and frequency within a certain range.

Note that the self-induced oscillation by the flip-flop nozzle can be generated by communicating a pair of the openings 42a, 42b with the communication pipe 5, as described above.

On the other hand, the self-induced oscillation as described above can be generated, for example, by providing a pressure control mechanism (not shown) on the path of the communication pipe 5 communicating between a pair of the openings 42a, 42b. By providing such a pressure control mechanism, for example, when the pressure in first opening 42a is controlled to be lower than the static pressure, the pressure in the other opening 42b can be controlled to be higher than the static pressure and the pressure in a pair of the openings 42a, 42b can be alternately reversed. In this manner, by alternately reversing the pressures of a pair of the openings 42a, 42b, the ejection direction of the fluid (the oxygen enriched air G2 or the fuel gas G1) ejected from the central fluid outlet 2 is periodically changed, and self-induced oscillation as described above can be generated.

In more detail, when the pressure in first opening 42a is made lower than the static pressure, and the pressure in second opening 42b arranged at the opposite position of the first opening 42a is made higher than the static pressure using the pressure control mechanism (not shown), as shown in FIG. 4A, the fluid flow is inclined to the first surface 43a side of a pair of the side walls 43, 43, and ejected. On the other hand, when the pressure in the first opening 42a is made higher than the static pressure and the pressure in the second opening 42b is made lower than the static pressure, as shown in FIG. 4B, the fluid flow is inclined to the second surface 43b side and ejected. The oxygen enriched burner 1 of the present embodiment can eject the oxygen enriched air and the fuel gas from the central fluid outlet 2 by periodically changing the ejection direction of the fluid by the configuration and operation as described above.

Moreover, the opening angle of a pair of the side walls 43, 43 in the fluid ejection flow path 4 shown in FIG. 2, that is, the opening angle α of the central fluid outlet 2 is not particularly limited, and can be set in consideration of the desired opening angle of the flame. However, from the view point of stably generating oscillation in the ejection direction of the fluid and realizing uniform heating, the angle is preferably 90° or less.

A plurality of the peripheral fluid outlets (peripheral fluid ejection nozzles) 3 are arranged around the central fluid outlet 2, as described above, and composed of a pair of the first peripheral fluid outlets 3A, 3A and a pair of the second peripheral fluid outlets 3B, 3B, which are arranged to face each other around the central fluid outlet 2.

In addition, peripheral fluid supply lines 7 (7A, 7B) are connected to the first peripheral fluid outlets 3A, 3A and the second peripheral fluid outlets 3B, 3B, respectively, and either oxygen enriched air or fuel gas is introduced. That is, the first peripheral fluid outlets 3A, 3A and the second peripheral fluid outlets 3B, 3B are configured as openings (nozzles) for ejecting any gas.

In the present embodiment, "periphery fluid outlet 3 is provided around central fluid outlet 2" means that central fluid outlet 2 and peripheral fluid outlet 3 are arranged within a desired distance. This means that the central fluid outlet 2 and the peripheral fluid outlet 3 are arranged adjacent to each other.

By arranging the periphery fluid outlet 3 with respect to the central fluid outlet 2 as described above, the oxygen enriched air can be ejected from a position substantially adjacent to a position at which the fuel gas is ejected.

As described above, a plurality of the peripheral fluid outlets 3 included in the oxygen enriched burner 1 of the present embodiment are composed of a pair of the first peripheral fluid outlets 3A, 3A and a pair of the second peripheral fluid outlets 3B, 3B which are arranged around the central fluid outlet 2 so as to face each other.

As shown in FIGS. 1 and 2, a pair of the first peripheral fluid outlets 3A, 3A are preferably arranged so as to sandwich a pair of the side walls 41 and 41 in which the openings 42a, 42b are arranged from both sides.

As shown in FIGS. 1 and 3, a pair of the second peripheral fluid outlets 3B, 3B are preferably arranged so as to sandwich the central fluid outlet 2 from both sides in a direction orthogonal to the facing direction of a pair of the openings 42a, 42b, that is, a direction orthogonal to the opposing direction of a pair of the first peripheral fluid outlets 3A, 3A.

In the oxygen enriched burner 1 of the present embodiment, as described above, a plurality of the peripheral fluid outlets are provided at respective symmetrical positions around the central fluid outlet 2. Specifically, a pair of the first peripheral fluid outlets 3A, 3A and a pair of the second peripheral fluid outlets 3B, 3B are arranged so as to sandwich the periphery of the central fluid outlet 2 from the vertical direction and the horizontal direction.

Thereby, for example, the fuel gas G1 ejected from the central fluid outlet 2 and the oxygen enriched air G2 ejected from a pair of the second peripheral fluid outlets 3B, 3B are efficiently mixed. At the same time, the oxygen enriched air G2 ejected from a pair of first peripheral fluid outlets 3A, 3A is directed toward the outside of the flame, so that the reduction region is widened, and the combustion efficiency at the time of forming the flame is improved.

It should be noted that the ejection angle β formed by a pair of the first peripheral fluid outlets 3A, 3A so as to sandwich the central fluid outlet 2 shown in FIG. 2 is not particularly limited. However, from the view point of achieving both improvement in heat transfer efficiency and expansion of the heating area, the ejection angle β is preferably such that the relationship with the opening angle α of the central fluid outlet 2 satisfies the expression {-5° ≤ β ≤ (α + 15°)}.

When -5° ≤ β, the heat transfer efficiency can be improved because the fluid ejected from the first peripheral fluid outlets 3A, 3A and the fluid ejected from the center fluid outlet 2 are well mixed. When β ≤ (α + 15°), the fluid ejected from the first peripheral fluid outlet 3 does not disturb the flow of the fluid ejected from the central fluid outlet 2, so that a wide heating area can be secured.

Further, the distance between each of a pair of the first peripheral fluid outlets 3A, 3A and a pair of the second peripheral fluid outlets 3B, 3B, which are arranged at symmetrical positions, and the distance between the peripheral fluid outlets 3 and the central fluid outlet 2 may be determined and designed as appropriate in consideration of the flow rate, and the like of the fuel gas G1 and the oxygen enriched air G2.

Further, the number of the peripheral fluid outlets 3 is not limited to the four locations of a pair of the first peripheral fluid outlets 3A, 3A and a pair of the second peripheral fluid outlets 3B, 3B, as shown in the shown example. The number of the periphery fluid outlets 3 may be determined as appropriate.

In the present embodiment, as shown in FIG. 1, the outlet width D1 between a pair of the side walls 41, 41 at which the openings 42a, 42b are arranged in the central fluid outlet 2, and the outlet width D2 in the direction along the outlet width D1 in a pair of the second peripheral fluid outlets 3B, 3B satisfy the expression {0.5D1 ≤ D2 ≤ D1}.

When 0.5D1 ≤ D2, good mixing of the fluid ejected from the second peripheral fluid outlets 3B, 3B the fluid ejected from the central fluid outlet 2 is maintained, so that it is possible to prevent a decrease in heat transfer efficiency. When D2 ≤ D1, the fluid ejected from the second peripheral fluid outlets 3B, 3B and the fluid ejected from the center fluid outlet 2 are prevented from mixing rapidly in the vicinity of each eject outlet, and it is possible to increase the heat transfer at a distance.

When the outlet widths D1 and D2 satisfy the formula above, for example, the fuel gas G1 ejected from the central fluid outlet 2 and the oxygen enriched air G2 ejected from a pair of the second peripheral fluid outlets 3B, 3B efficiently cross and mix, and the combustion efficiency when forming the flame is improved.

Further, in the present embodiment, as shown in FIG. 3, the angle γ° formed by the central axis J1 of the ejection direction of the oxygen enriched air or the fuel gas in the central fluid outlet 2 and the central axis J2 of the ejection direction of the oxygen enriched air or the fuel gas in the second peripheral fluid outlets 3B, 3B satisfy the expression {0° < γ ≤ 15 °}.

When the angle γ° formed by the central axis J1 of the ejection direction of the central fluid outlet 2 and the central axis J2 of the second peripheral fluid outlets 3B, 3B satisfy the expression, as described above, the fuel gas G1 and the oxygen enriched air G2 efficiently cross and mix, and the combustion efficiency when forming the flame is improved.

Further, in the oxygen enriched burner 1 of the present embodiment, it is preferable that an amount of the oxygen enriched air or the fuel gas ejected from a pair of the first peripheral fluid outlets 3A, 3A and a pair of the second peripheral fluid outlets 3B, 3B be individually controlled. In order to individually control the amount of the fluid ejected from a pair of the first peripheral fluid outlets 3A, 3A and the amount of the fluid ejected from a pair of the second peripheral fluid outlets 3B, 3B, for example, a flow control device not shown in figures may be provided in each of the peripheral fluid supply paths 7A, 7B shown in FIG. 2 or 3.

### [Method for Combusting Oxygen Enriched Burner]

Next, a method for combusting the oxygen enriched burner 1 having the configuration explained above according to the present embodiment will be described.

The oxygen enriched burner 1 of the present embodiment basically ejects the fuel gas G1 from the central fluid outlet 2 and ejects the oxygen enriched air G2 from a pair of the first peripheral fluid outlets 3A, 3A and a pair of the second peripheral fluid outlets 3B, 3B. Thus, a flame can be formed in the ejection direction of the fuel gas G1.

As the fuel gas G1, typically natural gas (LNG) or the like can be exemplified, but for example, liquid fuel such as heavy oil may be used.

Moreover, as the oxygen enriched air G2, a mixed gas of oxygen and air can be exemplified. As such a mixed gas, for example, nitrogen gas, carbon dioxide gas, exhaust gas or the like can be used instead of the air, and the gas can be mixed with oxygen and used. Moreover, industrial pure oxygen can be used as the oxygen used for the mixed gas.

Further, when the oxygen enriched burner 1 of the present embodiment is combusted, as explained above, the fuel gas G1 from the central fluid outlet 2 is ejected while changing the ejection direction alternately and periodically by self-induced oscillation (see FIGS. 4A and 4B). At this time, with respect to the fuel gas G1 ejected from the central fluid outlet 2 at a periodically changed angle, the oxygen enriched air G2 is ejected outward from the central axis of the oxygen enriched burner 1 from a pair of the first peripheral fluid outlets 3A, 3A, that is, the oxygen enriched air G2 is ejected in a direction away from the center of the flame. For this reason, the reduction region is expanded (see FIG. 2). On the other hand, as shown in FIG. 3, from a pair of the second peripheral fluid outlets 3B, 3B, the oxygen enriched air G2 is ejected toward the central axis J1 of the ejection direction of the fuel gas G1 from the central fluid outlet 2, that is, toward the flame, and thereby contributing to the formation of the flame.

In the present embodiment, heat transfer efficiency can be improved, and the object to be heated can be uniformly heated by ejecting the oxygen enriched air G2 from a pair of the first peripheral fluid outlets 3A, 3A and a pair of the second peripheral fluid outlets 3B, 3B provided so as to surround central fluid outlet 2.

Note that the switching cycle by the self-induced oscillation of the ejection direction of the fuel gas G2 ejected from the central fluid outlet 2 is not particularly limited. The switching cycle may be appropriately set within a range in which uniform heating can be performed with excellent heat transfer efficiency even at a position away from the tip surface in the axial direction of the burner.

The oxygen enriched burner 1 of the present embodiment is a burner which oscillates the flame by self-induced oscillation, and has a configuration in which the arrangement and shape of each fluid ejection outlet are optimized as described above. For this reason, both the effect of heating uniformly in a wide area and the effect of obtaining high heat transfer efficiency up to a position away from the tip surface in the axial direction of the burner are obtained. Therefore, even when the object be heated is away from the tip surface in the axial direction of the burner, it is possible to heat the object to be heated uniformly with excellent heat transfer efficiency.

### [Method for Heating using Oxygen Enriched Burner]

The method for heating using an oxygen enriched burner according to the present invention is a method for heating an object to be heated using the oxygen enriched burner 1 according to the present invention having the configuration above.

The method for heating using an oxygen enriched burner of the present embodiment is a method for heating an object to be heated using the oxygen enriched burner 1 configured as described above. For this reason, high heat transfer efficiency can be obtained compared with the prior art even at a position far away from the tip surface of the burner in the axial direction while heating the object to be heated uniformly by the flame which oscillates by self-induced oscillation.

The object to be heated in the method for heating using an oxygen enriched burner of the present embodiment is not particularly limited, but a ladle or a tundish for receiving pig iron (for example, a tundish 50 which is an imitation furnace in FIG 7) used in a steelmaking process can be exemplified.

The tundish 50 (imitation furnace) shown in FIG. 7 is formed of a furnace wall 51 and a furnace lid 52 which are made of a refractory material such as brick. In order to heat the furnace space 50A covered with the furnace wall 51 and the furnace lid 52, and the furnace wall 51 and the like, and form a flame toward the furnace space 50A, the oxygen enriched burner 1 of the present embodiment is provided in a through hole 52a formed in the furnace lid 52.

Moreover, since the tundish 50 shown in FIG. 7 is an experimental imitation furnace, a plurality of thermocouples 55 for measuring the temperature of each part are attached to the bottom of the furnace wall 51. In addition, the bottom of the furnace wall 51 are provided with a total of two outlets 53 for taking out pig iron and the like housed in the furnace space 50A.

The method for heating using an oxygen enriched burner of the present embodiment is a method for heating an object to be heated such as the tundish 50 shown in FIG. 7 using the oxygen enriched burner 1 of the present embodiment. For this reason, various object to be heated can be uniformly heated in a wide area, and high heat transfer efficiency can be obtained up to a position away from the tip end surface of the burner in the axial direction. As a result, even at a position away from the tip surface of the burner in the axial direction, it is possible to uniformly heat with excellent heat transfer efficiency.

Note that the object to be heated by the method for heating using the oxygen enriched burner 1 of the present embodiment is not limited to a jig or the like used in the steel making process as described above. In various manufacturing processes which require uniform heating, the method for heating an object to be heated of the present embodiment can use without any limitation.

### [Functions and Effects]

As described above, the oxygen enriched burner 1 of the present embodiment includes the central fluid outlet 2, a pair of the first peripheral fluid outlets 3A, 3A and a pair of the second peripheral fluid outlets 3B, 3B, which are arranged in a direction orthogonal to each other around the central fluid outlet 2, and a pair of the openings 42a, 42b provided on the side walls 41, 41 of the fluid ejection flow path 4 on the upstream side of the central fluid outlet 2, the angle γ° formed by the central axis J1 of the gas ejection direction in the central fluid outlet 2 and the central axis J2 of the gas ejection direction in a pair of the second peripheral fluid outlets 3B, 3B is within the predetermined range, and the outlet width D1 between a pair of the side walls 41, 41 at which the openings 42a, 42b are arranged in the central fluid outlet 2, and the outlet width D2 of a pair of the second peripheral fluid outlets 3B, 3B in the direction along the outlet width D1, satisfy the predetermined relationship.

As described above, in the burner having a structure in which the flame is oscillated by self-induced oscillation, by optimizing the arrangement and shape of each fluid ejection outlet, both the effect of heating uniformly over a wide area by the self-induced oscillation action and the effect of obtaining high heat transfer efficiency up to a position away from the tip surface of the burner in the axial direction can be obtained. Therefore, when heating the object to be heated, it is possible to uniformly heat with excellent heat transfer efficiency even at a position away from the tip surface of the burner.

In addition, the method for heating using an oxygen enriched burner of the present embodiment is the method for heating using the oxygen enriched burner 1 having the configuration above. Accordingly, similarly to the above, it is possible to uniformly heat the object to be heated over a wide area and to obtain a high heat transfer efficiency up to a position away from the tip surface of the burner. Therefore, similarly to the above, when heating the object to be heated, it is possible to uniformly heat with excellent heat transfer efficiency even at a position away from the tip surface of the burner in the axial direction.

### Examples

Hereinafter, the oxygen enriched burner of the present invention and the heating method using an oxygen enriched burner will be described in more detail with reference to Examples, but the present invention is not limited to the following Examples. The present invention can be implemented with appropriate modifications within a range not changing the gist thereof.

### [Specifications and Operating conditions of Oxygen Enriched Burner]

In Examples, the oxygen enriched burner 1 having the configuration shown in FIGS. 1 to 3 was prepared, and a combustion test was performed under the following conditions.

The oxygen enriched burner shown in FIG. 2 in which the opening angle α of the central fluid outlet 2 was set to 30° and the ejection angle β formed by a pair of the first peripheral fluid outlets 3A, 3A was set to 30° was used as an oxygen enriched burner 1 of Examples 1 to 3 and Comparative Examples 1 to 3.

In Examples 1 to 3, LNG was used as the fuel gas G1, an oxygen enriched air having an oxygen enrichment rate of 40% was used as the oxygen enriched air G2, the fuel gas G1 was supplied to the central fluid outlet 2, the oxygen enriched air G2 was supplied to the first peripheral fluid outlets 3A, 3A and the second peripheral fluid outlets 3B, 3B to form a flame.

As burner operating conditions, the flow rate of the fuel gas G1 (LNG) was set to 30 Nm³/h or 40 Nm³/h, the flow rate of the oxygen enriched air G2 was set to 181 Nm³/h or 241.5 Nm³/h, and the oxygen ratio was set to 1.05.

The flow rate of the oxygen enriched air G2 in the first periphery fluid outlet 3A, 3A and the second periphery fluid outlet 3B, 3B was adjusted so that the distribution ratio satisfied the expression {flow amount of the first periphery fluid outlets 3A, 3A / flow amount of the second periphery fluid outlets 3B, 3B = 6/4}.

The oscillation cycle of the fuel gas G1 by the self-induced oscillation in the central fluid outlet 2 was set to 1 second.

### [Example 1]

In Example 1, a test was performed by changing the distance between the tip surface of the burner and a measurement surface, and convection heat transfer efficiency in the axial direction of the burner was evaluated.

FIG. 5 shows the positional relationship between the central fluid outlet and the peripheral fluid outlets in Example 1 and Comparative Examples 1 to 3. FIG. 5A is a side diagram and a plan diagram of the burner used in Comparative Example 1, FIG. 5B is a side diagram and a plan diagram of the burner used in Comparative Example 2, FIG. 5C is a side diagram and a plan diagram of the burner used in Comparative Example 3, and FIG. 5D is a side diagram and a plan diagram of the burner used in Example 1.

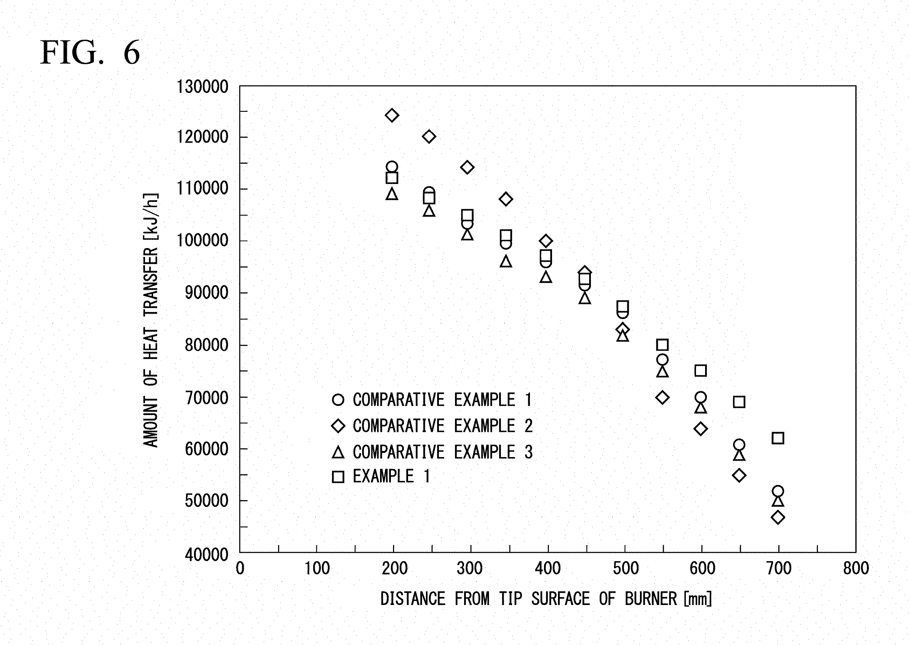

FIG. 6 shows the relationship between the distance from the tip surface of the burner and the amount of heat transfer in each burner of Example 1 and Comparative Examples 1 to 3.

Comparative Example 1 in FIG. 6 shows the relationship between the distance from the tip surface of the burner and the amount of heat transfer using the self-induced oscillation burner having the configuration shown in FIG. 5A.

In the burner of Comparative Example 1 shown in FIG. 5A, the outlet width D2 of the second peripheral fluid outlets was set so as to satisfy the expression {D2 = 10D1} with respect to the outlet width D1 between a pair of the side walls at which the openings are arranged in the fluid ejection flow path leading to the central fluid outlet.

In Comparative Example 1, the angle γ° formed by the central axis J1 of the ejection direction of the central fluid outlet and the central axis J2 of the ejection direction of a pair of the second peripheral fluid outlets was set to 0°.

As shown in FIG. 6, it can be seen that the amount of heat transfer is greatly reduced as the distance from the tip surface of the burner becomes longer in Comparative Example 1.

Comparative Example 2 in FIG. 6 shows the relationship between the distance from the tip surface of the burner and the amount of heat transfer using the self-induced oscillation burner having the configuration shown in FIG. 5B.

In the burner of Comparative Example 2 shown in FIG. 5B, the outlet width D2 of the second peripheral fluid outlets was set so as to satisfy the expression {D2 = 10D1} with respect to the outlet width D1 between a pair of the side walls at which the openings are arranged in the fluid ejection flow path leading to the central fluid outlet, and the angle γ° formed by the central axis J1 of the ejection direction of the central fluid outlet and the central axis J2 of the ejection direction of a pair of the second peripheral fluid outlets was set to 15°.

As shown in FIG. 6, in Comparative Example 2, the mixing of the fuel gas G1 and the oxygen enriched air G2 was promoted by tilting the ejection direction of the second peripheral fluid outlets toward the ejection direction of the central fluid outlet. On the other hand, since the flame was shortened, the amount of heat transfer tended to be lower than that of Comparative Example 1 when the distance from the tip surface of the burner was about 600 mm.

Comparative Example 3 in FIG. 6 shows the relationship between the distance from the tip surface of the burner and the amount of heat transfer using the self-induced oscillation burner having the configuration shown in FIG. 5C.

In the burner of Comparative Example 3 shown in FIG. 5C, the outlet width D2 of the second peripheral fluid outlets was set to be the same as the outlet width D1 in the fluid ejection flow path, and the angle γ° formed by the central axis J1 and the central axis J2 was set to 0°.

As shown in FIG. 6, in Comparative Example 3, although the outlet width D2 of the second peripheral fluid outlets was narrow, the angle γ ° formed by the central axes J1 and J2 was 0 °, so that the mixing efficiency of the fuel gas G1 and the oxygen enriched air G2 was reduced, and there was a tendency for the amount of heat transfer to decrease overall compared with Comparative Example 1.

Example 1 in FIG. 6 shows the relationship between the distance from the tip surface of the burner and the amount of heat transfer using the self-induced oscillation burner having the configuration shown in FIG. 5D.

In the burner of Example 1 shown in FIG. 5D, the outlet width D2 of the second peripheral fluid outlets was set to be the same as the outlet width D1 in the fluid ejection flow path, and the angle γ° formed by the central axis J1 and the central axis J2 was set to 15°.

As shown in FIG. 6, in Example 1, since the outlet width D2 of the second peripheral fluid outlets was narrow, the mixing efficiency of the fuel gas G1 and the oxygen enriched air G2 was lowered, and therefore, when the distance from the tip surface of the burner was shorter than 400 mm, there was a tendency for the amount of heat transfer decreased compared with Comparative Example 1.

On the other hand, in Example 1, it was confirmed that mixing of the fuel gas G1 and oxygen enriched air G2 at a position far from the tip surface of the burner was promoted by tilting the ejection direction of the second peripheral fluid outlets toward the ejection direction of the central fluid outlet, and when the distance from the tip surface of the burner was 400 mm or more, the amount of heat transfer increased compared with Comparative Example 1.

### [Example 2]

In Example 2, a tundish 50 as a simulated furnace as shown in FIG. 7 was used, and a heating test was performed using the oxygen enriched burner used in Example 1. Further, in Comparative Example 4, a conventional multi-tube type oxygen enriched burner was used, and a heating test was performed using the tundish 50 shown in FIG. 7.

In the tundish 50 (simulated furnace) shown in FIG. 7, the oxygen enriched burner used in Example 1 was attached to a through hole 52a formed in a furnace lid 52 so that a flame could be formed toward a furnace space 50A so as to heat the furnace space 50A covered by the furnace wall 51 and the furnace lid 52, and the furnace wall 51. In addition, a plurality of thermocouples 55 for measuring the temperature of each part were attached to the bottom of the furnace wall 51, and a discharge outlets 53 for taking out pig iron and the like housed in the furnace space 50A were provided in two places.

In Example 2, in the heating test of the tundish 50, the temperature was measured by a plurality of the thermocouples 55 installed at the bottom of the furnace. A temperature difference ΔT between the maximum temperature and the minimum temperature measured by the plurality of thermocouples 55 was obtained and evaluated.

In Example 2, the burner was installed so that the distance from the tip surface of the burner in the tundish 50 to the bottom (bottom surface) of the furnace wall 51 was 600 mm.

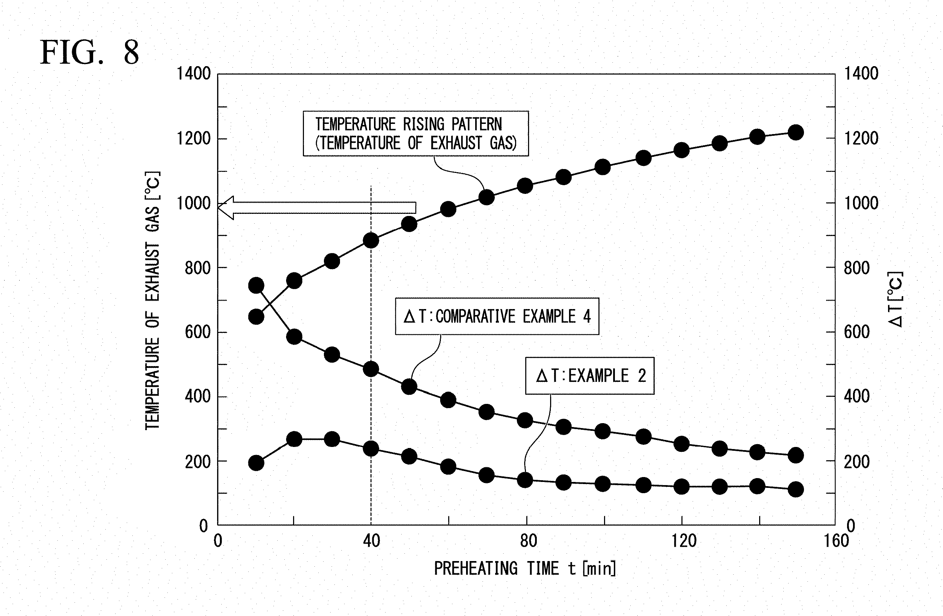

FIG. 8 shows the relationship between the preheating time and the temperature difference ΔT between the maximum temperature and the minimum temperature at the bottom of the furnace when the heating test in the furnace was performed by each burner in Example 2 and Comparative Example 4 using the tundish 50 shown in FIG. 7.

In FIG. 8, the change of the temperature of the exhaust gas in the heating test performed in Example 2 is also shown.

In Example 2 and Comparative Example 4, the heating test was carried out with a temperature rising pattern having an exhaust gas temperature as shown in FIG. 8. As a result, it can be seen that the temperature difference ΔT is smaller in Example 2 than in Comparative Example 4. That is, it is considered that the temperature inside the furnace can be increased more uniformly while achieving the same heat transfer efficiency as that of the conventional oxygen enriched burner by using the oxygen enriched burner of

### Example 2.

### [Example 3]

In Example 3, a tundish 50 as a simulated furnace as shown in FIG. 7 was used, and a heating test was performed using the oxygen enriched burner used in Example 1. Further, in Comparative Example 5, a conventional multi-tube type oxygen enriched burner was used, and a heating test was performed using the tundish 50 shown in FIG. 7.

In Example 3, in the heating test of the tundish 50, the temperature distribution on the central axis of the burner was examined. Specifically, the relationship between the distance from the central axis of the burner and the furnace bottom temperature was measured by measuring the temperature of the parts (furnace bottom) with a plurality of the thermocouples 55 installed at the bottom of the furnace wall 51. The temperature after 40 minutes from the start of temperature increase was measured.

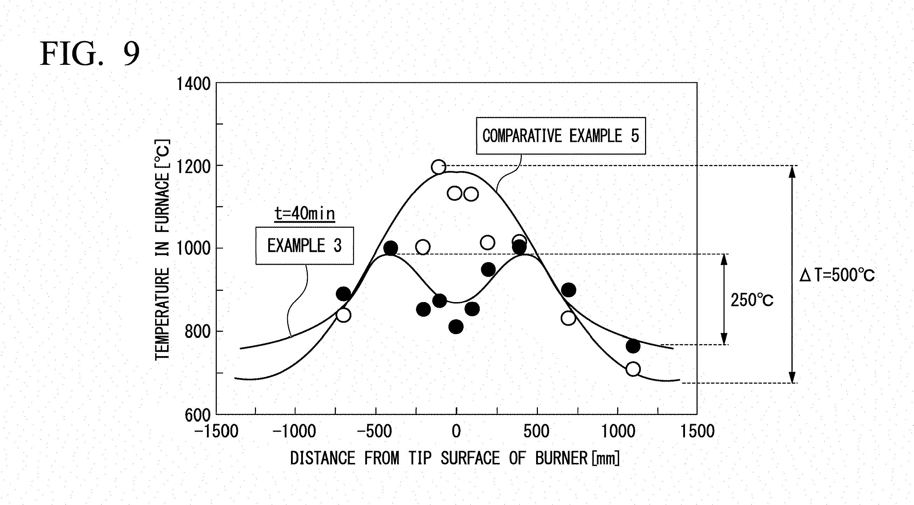

FIG. 9 shows the relationship between the distance from the central axis of the burner and the temperature at the bottom of the furnace when the heating test in the furnace was performed in Example 3 and Comparative Example 5 using the tundish 50 shown in FIG. 7. In FIG. 9, the data in Example 3 is shown by a solid plot, and the data of Comparative Example 5 is shown by a white plot.

As shown in FIG. 9, in Comparative Example 5, it can be seen that the temperature near the central axis of the burner increases significantly. That is, in Comparative Example 5, it is clear that local heating of the furnace space 50A occurs.

On the other hand, in Example 3, it can be seen that the temperature distribution is uniform compared to Comparative Example 5. That is, in Example 3, it is clear that each part in the furnace space 50A can be heated uniformly by heating the furnace space 50A of the tundish 50 with the oxygen enriched burner used in Example 1.

From the results of Examples and Comparative Examples as described above, it can be understood that the oxygen enriched burner used in Examples can improve the heat transfer efficiency at a position away from the tip surface of the burner as compared with the self-induced oscillation burner having a conventional structure.

Therefore, it is clear that when the oxygen enriched burner used in Examples and the method for heating using the same are applied to preheating such as a tundish, local heating is prevented and even with various types of object to be heated located away from the tip surface of the burner in the axial direction, uniform heating can be achieved with excellent heat transfer efficiency.

### Industrial applicability

According to the oxygen enriched burner, and the method for heating using an oxygen enriched burner of the present invention, when heating the object to be heated while oscillating the flame with self-induced oscillation, even at a position away from the tip surface of the burner in the axial direction, uniform heating can be achieved with excellent heat transfer efficiency. Accordingly, the oxygen enriched burner, and the method for heating using an oxygen enriched burner of the present invention is every useful in various applications in which an object to be heated is heated using a burner in addition to the application of heating the tundish and the ladle used for storing and transporting molten iron and molten steel in steelmaking and steelmaking plants.

### Explanation of Symbols

- 1: oxygen enriched burner
- 2: central fluid outlet
- 3: peripheral fluid outlet
3A (a pair of) first peripheral fluid outlet
3B (a pair of) second peripheral fluid outlet
- 4: fluid ejection flow path
4a inlet
41 (a pair of) side wall
42a, 42b (a pair of) opening
43 (a pair of) side wall
43a first surface
43b second surface
44 (rectangular tube-shaped) flow path
- 5: communication pipe
- 6: central fluid supply line
- 7 (7A, 7B): peripheral fluid supply line
- 50: tundish (imitation furnace)
50A furnace space
51 furnace wall
52 furnace lid
53 outlet
- G1: fuel gas
- G2: oxygen enriched air
- J1: central axis (of ejection direction in center fluid outlet)
- J2 J2: central axis (of ejection direction in second peripheral fluid outlet)

## Claims

1. A burner (1) which is configured to eject at least one of an oxygen enriched air (G2) and a fuel gas (G1) from each of a plurality of fluid ejection outlets provided at a tip surface and burns,
wherein the plurality of the fluid ejection outlets include a central fluid outlet (2) and peripheral fluid outlet (3) arranged around the central fluid outlet (2),
side walls (41) of a fluid ejection flow path (4) on an upstream side of the central fluid outlet (2) are provided with a pair of openings (42a, 42b) at opposing positions, and the pair of the openings (42a, 42b) communicate with each other via a communication pipe (5),
the fluid ejection flow path (4) on a downstream side of the pair of the openings (42a, 42b) has a sectional fan shape in which a distance between a pair of the side walls (43) gradually expands toward the downstream side,
a fluid ejected from the central fluid outlet (2) is oscillated by self-induced oscillation,
the peripheral fluid outlet (3) includes a pair of first peripheral fluid outlets (3A) arranged to face each other and a pair of second peripheral fluid outlets (3B) arranged to face each other,
the first peripheral fluid outlets (3A) and the second peripheral fluid outlets (3B) are arranged around the central fluid outlet (2) so as to sandwich the central fluid outlet (2),
the pair of the second peripheral fluid outlets (3B) are arranged in a direction orthogonal to the facing direction of the pair of the openings (42a, 42b),
an angle γ° formed by a central axis (J2) in an ejection direction of the oxygen enriched air (G2) or the fuel gas (G1) in the central fluid outlet (2) and the central axis (J2) in an ejection direction of the oxygen enriched air (G2) or the fuel gas (G1) in the pair of the second peripheral fluid outlets (3B) satisfies an expression {0° < γ ≤ 15°}, and
an outlet width D1 between the pair of the side walls (43) at which the pair of the openings (42a, 42b) are arranged in the central fluid outlet (2) and an outlet width D2 of the pair of the second peripheral fluid outlets (3B) in a direction along the outlet width D1 satisfy an expression {0.5D1 ≤ D2 ≤ D1}.

2. The oxygen enriched burner (1) according to Claim 1, wherein the pair of the first peripheral fluid outlets (3A) are arranged so as to sandwich the pair of the side walls (43) in which the openings (42a, 42b) are arranged from both sides.

3. The oxygen enriched burner (1) according to Claim 1 or 2, wherein the pair of the first peripheral fluid outlets (3A) and the pair of the second peripheral fluid outlets (3B) are configured to individually control an amount of the oxygen enriched air (G2) ejected or the fuel gas (G1) ejected.

4. A method for heating an object to be heated using an oxygen enriched burner (1), wherein the oxygen enriched burner (1) is the oxygen enriched burner (1) according to any one of Claims 1 to 3.

## Patentansprüche

1. Brenner (1), der dazu konfiguriert ist, aus jedem einer Vielzahl von Fluidausstoßauslässen, die an einer Spitzenoberfläche vorgesehen sind, mindestens eines von einer mit Sauerstoff angereicherten Luft (G2) und einem Brenngas (G1) auszustoßen, und brennt,
wobei die Vielzahl von Fluidausstoßauslässen einen zentralen Fluidauslass (2) und einen peripheren Fluidauslass (3) beinhalten, der um den zentralen Fluidauslass (2) herum angeordnet ist,
Seitenwände (41) eines Fluidausstoßströmungswegs (4) auf einer stromaufwärtigen Seite des zentralen Fluidauslasses (2) mit einem Paar Öffnungen (42a, 42b) an gegenüberliegenden Positionen vorgesehen sind und das Paar der Öffnungen (42a, 42b) über ein Kommunikationsrohr (5) miteinander kommunizieren,
der Fluidausstoßströmungsweg (4) auf einer stromabwärtigen Seite des Paares der Öffnungen (42a, 42b) eine Querschnittsfächerform aufweist, bei der sich ein Abstand zwischen einem Paar der Seitenwände (43) zur stromabwärtigen Seite hin allmählich vergrößert,
ein aus dem zentralen Fluidauslass (2) ausgestoßenes Fluid durch selbstinduzierte Schwingung in Schwingungen versetzt wird,
der periphere Fluidauslass (3) ein Paar erster peripherer Fluidauslässe (3A), die so angeordnet sind, dass sie einander zugewandt sind, und ein Paar zweiter peripherer Fluidauslässe (3B), die so angeordnet sind, dass sie einander zugewandt sind, beinhaltet,
die ersten peripheren Fluidauslässe (3A) und die zweiten peripheren Fluidauslässe (3B) um den zentralen Fluidauslass (2) herum angeordnet sind, sodass sie den zentralen Fluidauslass (2) dazwischen einschließen,
das Paar der zweiten peripheren Fluidauslässe (3B) in einer Richtung orthogonal zur weisenden Richtung des Paares der Öffnungen (42a, 42b) angeordnet ist,
ein Winkel γ°, der durch eine Mittelachse (J2) in einer Ausstoßrichtung der mit Sauerstoff angereicherten Luft (G2) oder des Brenngases (G1) im zentralen Fluidauslass (2) und der Mittelachse (J2) in einer Ausstoßrichtung der mit Sauerstoff angereicherten Luft (G2) oder des Brenngases (G1) im Paar der zweiten peripheren Fluidauslässe (3B) gebildet wird, einen Ausdruck {0° < *γ* ≤ 15°} erfüllt, und
eine Auslassbreite D1 zwischen dem Paar der Seitenwände (43), an denen das Paar der Öffnungen (42a, 42b) im zentralen Fluidauslass (2) angeordnet ist, und eine Auslassbreite D2 des Paars der zweiten peripheren Fluidauslässe (3B) in einer Richtung entlang der Auslassbreite D 1 den Ausdruck {0,5D1 ≤ D2 ≤ D1} erfüllt.

2. Mit Sauerstoff angereicherter Brenner (1) nach Anspruch 1, wobei das Paar der ersten peripheren Fluidauslässe (3A) so angeordnet ist, dass es das Paar der Seitenwände (43), in denen die Öffnungen (42a, 42b) angeordnet sind, dazwischen von beiden Seiten einschließt.

3. Mit Sauerstoff angereicherter Brenner (1) nach Anspruch 1 oder 2, wobei das Paar der ersten peripheren Fluidauslässe (3A) und das Paar der zweiten peripheren Fluidauslässe (3B) dazu konfiguriert sind, eine Menge der ausgestoßenen mit Sauerstoff angereicherten Luft (G2) oder des ausgestoßenen Brenngases (G1) individuell zu steuern.

4. Verfahren zum Erhitzen eines zu erhitzenden Objekts unter Verwendung eines mit Sauerstoff angereicherten Brenners (1), wobei der mit Sauerstoff angereicherte Brenner (1) der mit Sauerstoff angereicherte Brenner (1) nach einem der Ansprüche 1 bis 3 ist.

## Revendications

1. Brûleur (1) qui est configuré pour éjecter au moins l'un d'un air enrichi en oxygène (G2) et d'un gaz combustible (G1) à partir de chacune d'une pluralité de sorties d'éjection de fluide prévues au niveau d'une surface de pointe et brûle,
dans lequel la pluralité de sorties d'éjection de fluide comprennent une sortie de fluide centrale (2) et une sortie de fluide périphérique (3) disposées autour de la sortie de fluide centrale (2),
des parois latérales (41) d'un trajet d'écoulement d'éjection de fluide (4) sur un côté amont de la sortie de fluide centrale (2) sont dotées d'une paire d'ouvertures (42a, 42b) à des positions opposées, et la paire d'ouvertures (42a, 42b) communiquent l'une avec l'autre via un canal de communication (5),
le trajet d'écoulement d'éjection de fluide (4) sur un côté aval de la paire d'ouvertures (42a, 42b) a une forme d'éventail en coupe dans laquelle une distance entre une paire de parois latérales (43) s'étend progressivement vers le côté aval,
un fluide éjecté de la sortie de fluide centrale (2) oscille par oscillation auto-induite,
la sortie de fluide périphérique (3) comprend une paire de premières sorties de fluide périphériques (3A) disposées pour se faire face et une paire de secondes sorties de fluide périphériques (3B) disposées pour se faire face,
les premières sorties de fluide périphériques (3A) et les secondes sorties de fluide périphériques (3B) sont disposées autour de la sortie de fluide centrale (2) de manière à prendre en sandwich la sortie de fluide centrale (2),
la paire des secondes sorties de fluide périphériques (3B) sont disposées dans une direction orthogonale à la direction opposée de la paire des ouvertures (42a, 42b),
un angle γ° formé par un axe central (J2) dans une direction d'éjection de l'air enrichi en oxygène (G2) ou du gaz combustible (G1) dans la sortie de fluide centrale (2) et l'axe central (J2) dans une direction d'éjection de l'air enrichi en oxygène (G2) ou du gaz combustible (G1) dans la paire des secondes sorties de fluide périphériques (3B) satisfait une expression {0° < γ ≤ 15°}, et
une largeur de sortie D1 entre la paire de parois latérales (43) au niveau de laquelle la paire d'ouvertures (42a, 42b) sont disposées dans la sortie de fluide centrale (2) et une largeur de sortie D2 de la paire des secondes sorties de fluide périphériques (3B) dans une direction le long de la largeur de sortie D1 satisfait à une expression {0,5 D1 ≤ D2 ≤ D1}.

2. Brûleur enrichi en oxygène (1) selon la revendication 1, dans lequel la paire des premières sorties de fluide périphériques (3A) sont disposées de manière à prendre en sandwich la paire de parois latérales (43) dans lesquelles les ouvertures (42a, 42b) sont agencées des deux côtés.

3. Brûleur enrichi en oxygène (1) selon la revendication 1 ou 2, dans lequel la paire de premières sorties de fluide périphérique (3A) et la paire de secondes sorties de fluide périphérique (3B) sont configurées pour commander individuellement une quantité de l'air enrichi en oxygène (G2) éjecté ou du gaz combustible (G1) éjecté.

4. Procédé pour chauffer un objet à chauffer à l'aide d'un brûleur enrichi en oxygène (1), dans lequel le brûleur enrichi en oxygène (1) est le brûleur enrichi en oxygène (1) selon l'une quelconque des revendications 1 à 3.
